# EUROPÄISCHE PATENTSCHRIFT

(11) **EP 3 526 121 B1**
(45) Veröffentlichungstag und Bekanntmachung des Hinweises auf die Patenterteilung: **29.12.2021**
(21) Anmeldenummer: 17768751.4
(22) Anmeldetag: 14.09.2017
(51) Int. Cl.: B64D 27/24, B64D 33/08, B64D 37/34, H02K 9/19

(54) **ANTRIEBSSYSTEM FÜR EIN FAHRZEUG MIT VERBRENNUNGSKRAFTMASCHINE UND TREIBSTOFFTANK**
DRIVE SYSTEM FOR A VEHICLE WITH AN INTERNAL COMBUSTION ENGINE AND FUEL TANK
SYSTÈME DE PROPULSION POUR UN VÉHICULE COMPRENANT UN MOTEUR À COMBUSTION INTERNE ET UN RÉSERVOIR DE CARBURANT

(30) Priorität: 11.10.2016 DE 102016219680
(43) Veröffentlichungstag der Anmeldung: 21.08.2019
(73) Patentinhaber: Rolls-Royce Deutschland Ltd & Co KG, 15827 Blankenfelde-Mahlow (DE)
(72) Erfinder: FILIPENKO, Mykhaylo, 91058 Erlangen (DE); FRANK, Michael, 91080 Uttenreuth (DE); GLEIXNER, Thomas, 91054 Erlangen (DE); RICHTER, Johannes, 90768 Fürth (DE); VAN HASSELT, Peter, 91058 Erlangen (DE)
(86) Internationale Anmeldenummer: PCT/EP2017/073071
(87) Internationale Veröffentlichungsnummer: WO 2018/068979

(56) Entgegenhaltungen:
- EP-A1- 3 048 042
- EP-A2- 1 630 930
- WO-A1-02/16743
- FR-A1- 2 936 393
- GB-A- 2 095 757
- US-A- 5 223 757
- US-A1- 2006 254 255

## Beschreibung

Die vorliegende Erfindung betrifft ein Antriebssystem für ein Fahrzeug, insbesondere ein Luftfahrzeug, gemäß Anspruch Weiterhin betrifft die Erfindung ein Fahrzeug, insbesondere ein Luftfahrzeug, mit einem derartigen Antriebssystem sowie ein Verfahren zur Kühlung einer elektrischen Maschine in einem solchen Antriebssystem.

Bei herkömmlichen elektrischen Maschinen, die für Antriebe von Fahrzeugen ausgelegt sind, wird eine im Betrieb notwendige Kühlung typischerweise durch ein Kühlsystem erreicht, durch das eine Kühlflüssigkeit in die zu kühlenden Bereiche der Maschine gepumpt wird. Insbesondere werden solche Kühlflüssigkeiten oft durch den Stator der Maschine gepumpt. Sie werden dabei in einem geschlossenen Kühlkreislauf zirkuliert und dabei an einem von der Maschine räumlich entfernteren Ort wieder auf eine niedrigere Temperatur zurückgekühlt. Hierzu werden oft Wärmetauscher eingesetzt, um die von der Kühlflüssigkeit im Bereich der Maschine aufgenommene Wärme an ein anderes Medium - beispielsweise die Umgebungsluft - abzuführen.

Bei elektrischen Maschinen mit direkter Wicklungskühlung wird das Kühlmittel in direkten Kontakt mit der zu kühlenden Wicklung gebracht, beispielsweise mit der Statorwicklung. Dazu muss das Kühlmedium elektrisch isolierend sein, so dass Kühlflüssigkeiten auf Wasserbasis hierfür allgemein ausscheiden. Weitere Anforderungen an die Kühlflüssigkeit sind eine niedrige Viskosität bei hoher spezifischer Wärmekapazität, um bei niedrigen Druckverlusten hohe Wärmeübergangskoeffizienten erreichen zu können. Zur Kühlung von Statorwicklungen wird beispielsweise nach dem Stand der Technik die von 3M unter dem Markennamen Novec 7500 angebotene Flüssigkeit verwendet, die aus dem Hydrofluorether C₇F₁₅OC₂H₅ besteht. Diese Flüssigkeit ist elektrisch isolierend und weist bei 25°C eine spezifische Wärmekapazität von 1,13 kJ/kg·K und eine kinematische Viskosität von 0,77 mm²/s auf. Da sie außerdem nicht brennbar und nicht entflammbar ist, eignet sie sich gut zur Kühlung von Wicklungen in elektrischen Maschinen. Allgemein werden nach dem Stand der Technik solche nicht brennbaren und nicht entflammbaren Kühlflüssigkeiten zur Maschinenkühlung verwendet, um ein zusätzliches Gefährdungspotential zu vermeiden. Nachteilig bei der Verwendung einer solchen herkömmlichen Kühlflüssigkeit ist, dass vor allem bei hohen Maschinenleistungen ein relativ großes Kühlmittelvolumen im Kühlkreislauf benötigt wird, um eine effektive Kühlung der Maschine zu erreichen. Hierdurch entsteht ein Beitrag zum Gesamtgewicht der Maschine, der sich negativ auf die Leistungsdichte der Maschine auswirkt. Außerdem muss dieses Kühlmittelvolumen thermisch gut an ein weiteres Medium - beispielsweise die Umgebungsluft - angekoppelt sein, um das Kühlmittel dauerhaft in einem für die Kühlung der Maschine zweckmäßigen Temperaturbereich zu halten. Hierzu werden oft zusätzliche Wärmetauscherstrukturen benötigt, die ebenfalls zum Gesamtgewicht der Maschine beitragen. Antriebssysteme für Fahrzeuge werden in GB 2 095 757 A, US 2006/254255 A1 und FR 2 936 393 A1 beschrieben.

Aufgabe der Erfindung ist es daher, ein Antriebssystem für ein Fahrzeug - insbesondere ein Luftfahrzeug - anzugeben, welches die genannten Nachteile überwindet. Insbesondere soll ein Antriebssystem mit einer elektrischen Maschine zur Verfügung gestellt werden, bei welchem ein Kühlsystem zur Kühlung der elektrischen Maschine einen geringen Beitrag zum Gesamtgewicht der Maschine aufweist. Eine weitere Aufgabe ist es, ein Fahrzeug mit einem derartigen Antriebssystem und ein Verfahren zur Kühlung einer elektrischen Maschine in einem solchen Antriebssystem anzugeben.

Diese Aufgaben werden durch das in Anspruch 1 beschriebene Antriebssystem, das in Anspruch 9 beschriebene Fahrzeug und das in Anspruch 10 beschriebene Verfahren gelöst.

Das erfindungsgemäße Antriebssystem ist als Antriebssystem für ein Fahrzeug ausgestaltet. Es weist eine Verbrennungskraftmaschine zur Umwandlung von in einem flüssigen Treibstoff gespeicherter chemischer Energie in mechanische Energie auf. Ferner weist es einen Treibstofftank zur Versorgung der Verbrennungskraftmaschine mit Treibstoff auf. Außerdem umfasst es eine elektrische Maschine mit einem Rotor und einem Stator sowie einem Kühlsystem zur Kühlung von wenigstens einem Bestandteil der elektrischen Maschine mit Hilfe einer Kühlflüssigkeit. Dabei ist das Kühlsystem dazu ausgelegt, den Treibstoff der Verbrennungskraftmaschine als Kühlflüssigkeit für die elektrische Maschine zu verwenden.

Mit anderen Worten sind bei dem Antriebssystem der flüssige Treibstoff für die Verbrennungskraftmaschine und die Kühlflüssigkeit der elektrischen Maschine identisch. Bei der elektrischen Maschine kann es sich dabei um einen Motor oder einen Generator handeln, oder auch um eine Maschine, die für beide Betriebsarten ausgelegt ist. Das Antriebssystem kann insbesondere sowohl einen Generator als auch einen Motor umfassen, wovon zumindest eine Maschine mit dem Treibstoff als Kühlflüssigkeit gekühlt wird. Das Antriebssystem beruht dann insgesamt darauf, dass zunächst ins der Verbrennungskraftmaschine aus der Energie des Treibstoffs mechanische Energie erzeugt wird. Diese kann im Generator in elektrische Energie umgewandelt werden, die dann anschließend vom Motor zum Antrieb des Fahrzeugs verwendet wird. Auf diese Weise steht insbesondere ein voll-elektrischer Antrieb zur Verfügung, dessen elektrische Energie an Bord aus dem Treibstoff gewonnen wird.

Durch die erfindungsgemäßen Merkmale wird erreicht, dass die elektrische Maschine effektiv gekühlt wird, ohne dass dabei ein zusätzlicher Gewichtsbeitrag durch eine zusätzliche Kühlflüssigkeit zustande kommt. Stattdessen wird der ohnehin zur Energiegewinnung benötigte Treibstoff als Kühlflüssigkeit benutzt. Es handelt sich also um einen Synergieeffekt, bei dem dieselbe Flüssigkeit zwei getrennte Funktionen erfüllen kann, wodurch insgesamt die Leistungsdichte des Antriebssystems im Vergleich zum Stand der Technik gesteigert werden kann. Besonders bevorzugt kommt neben dem flüssigen Treibstoff gar kein weiteres flüssiges Kühlmittel zur Kühlung von wenigstens einer der an Bord befindlichen elektrischen Maschinen zum Einsatz. Es können ganz besonders vorteilhaft sowohl der Generator als auch der Motor mit Treibstoff als Kühlflüssigkeit gekühlt werden. Insbesondere können alle solchen für den Antrieb genutzten Generatoren und Motoren auf diese Weise gekühlt werden. Wesentlich für die Erfindung ist aber nur, dass zumindest eine der an Bord befindlichen Maschinen zumindest zum Teil mit dem Treibstoff gekühlt wird.

Die für den Antrieb von Luftfahrzeugen eingesetzten Treibstoffe haben den Vorteil, dass sie elektrisch isolierend sind und eine hohe spezifische Wärmekapazität aufweisen. Damit sind sie ähnlich wie beispielsweise das vorab beschriebene Novec 7500 zur Kühlung elektrischer Maschinen, insbesondere zur direkten Wicklungskühlung geeignet. Weiterhin weisen sie eine hinreichend niedrige Viskosität und einen bei der Betriebstemperatur ausreichend niedrigen Dampfdruck sowie eine ausreichend hohe Wärmeleitfähigkeit auf. Im Gegensatz zu herkömmlichen Kühlflüssigkeiten für elektrische Maschinen ist der Treibstoff prinzipiell sowohl brennbar als auch entflammbar. Daher würde er aufgrund von typischen Spezifikationen nicht als Kühlflüssigkeit für solche Maschinen eingesetzt. Da an Bord des Luftfahrzeugs aber bereits ohnehin ein beträchtliches Volumen an Treibstoff vorhanden ist, wird durch dessen Verwendung als Kühlflüssigkeit keine zusätzliche Gefahrenquelle geschaffen. Es muss lediglich durch konstruktive Maßnahmen verhindert werden, dass im Bereich der zu kühlenden elektrischen Maschine eine erhöhte Gefahr der Flammenbildung auftritt. Die Betriebstemperatur der Kühlflüssigkeit in der elektrischen Maschine kann dabei insbesondere im Bereich zwischen -45°C und 120 °C liegen.

Der Treibstoff und damit die Kühlflüssigkeit kann dabei grundsätzlich entweder als Teil des Antriebssystems verstanden werden, oder aber das Antriebssystem ist nur dazu ausgelegt, mit einem solchen Treibstoff verwendet zu werden.

Das erfindungsgemäße Fahrzeug, das insbesondere als Luftfahrzeug ausgebildet ist, ist mit einem erfindungsgemäßen Antriebssystem ausgestattet. Das erfindungsgemäße Verfahren dient zur Kühlung einer elektrischen Maschine in einem erfindungsgemäßen Antriebssystem. Es weist wenigstens den folgenden Schritt auf:
- Einspeisen von Treibstoff aus dem Treibstofftank in das Kühlsystem und Verwendung des Treibstoffs als Kühlflüssigkeit zum Kühlen von wenigstens einem Bestandteil der elektrischen Maschine. Die Vorteile des erfindungsgemäßen Fahrzeugs und des erfindungsgemäßen Verfahrens ergeben sich dabei analog zu den beschriebenen Vorteilen des erfindungsgemäßen Antriebssystems.

Vorteilhafte Ausgestaltungen und Weiterbildungen der Erfindung gehen aus den von den Ansprüchen 1 und 10 abhängigen Ansprüchen sowie der folgenden Beschreibung hervor. Dabei können die beschriebenen Ausgestaltungen des Antriebssystems, des Fahrzeugs und des Verfahrens zur Kühlung allgemein vorteilhaft miteinander kombiniert werden.

Der Treibstoff ist Kerosin . Unter Kerosin wird im vorliegenden Zusammenhang ein Flugturbinenkraftstoff verstanden, beispielsweise ein Treibstoff der Sorte Jet A, Jet A-1, Jet B, TS-1 oder JP-1 bis JP-8 oder ein ähnlicher für diesen Einsatzzweck spezifizierter leichter Treibstoff. Kerosin weist vorteilhaft eine vergleichsweise hohe spezifische Wärmekapazität und Wärmeleitfähigkeit und eine niedrige Viskosität auf.

So kann die spezifische Wärmekapazität des Treibstoffs bei 25°C allgemein vorteilhaft bei wenigstens 1,5 kJ/kg^{.}K, insbesondere wenigstens 1,7 kJ/kg^{.}K oder sogar wenigstens 2,0 kJ/kg^{.}K liegen. Die kinematische Viskosität des Treibstoffs kann allgemein vorteilhaft bei 25°C im Bereich von höchstens 3 mm²/s, insbesondere höchstens 2 mm²/s liegen. Die thermische Leitfähigkeit des Treibstoffs kann vorteilhaft bei wenigstens 0,1 W/m^{.}K, insbesondere zwischen 0,1 und 0,15 W/m^{.}K liegen. Diese Wertebereiche werden von Kerosin vorteilhaft eingehalten.

Die elektrische Maschine weist bevorzugt eine Leistungsdichte von wenigstens 5 kW/kg auf. Besonders bevorzugt liegt die Leistungsdichte bei wenigstens 10 kW/kg oder sogar bei wenigstens 20 kW/kg. Alternativ oder zusätzlich zu der angegebenen Leistungsdichte kann sie bevorzugt eine Nennleistung von wenigstens 5 MW, insbesondere wenigstens 10 MW oder sogar wenigstens 20 MW aufweisen. Die genannten vorteilhaften Bereiche gelten unabhängig davon, ob es sich bei der entsprechend der Erfindung gekühlten elektrischen Maschine um einen Generator oder um einen Motor des Antriebssystems handelt. Die genannten Bereiche der Nennleistung und der Leistungsdichte entsprechen den typischen Anforderungen für ein kommerzielles elektrisch angetriebenes Luftfahrzeug.

Das Volumen des Treibstofftanks für ein solches elektrisch angetriebenes Fahrzeug kann vorteilhaft bei wenigstens 1 m³, insbesondere bei wenigstens 5 m³ oder sogar bei wenigstens 20 m³ liegen. Derartig große Volumina sind nötig für den Antrieb eines kleinen bis mittelgroßen Luftfahrzeugs. Die Vorteile der Erfindung kommen bei einem derart großen Treibstoffvolumen besonders zum Tragen, da dann viel flüssiger Treibstoff zur Verfügung steht, der gleichzeitig als Kühlflüssigkeit für die elektrische Maschine genutzt werden kann.

Die Verbrennungskraftmaschine kann bevorzugt eine Gasexpansionsturbine und eine Turbinenwelle aufweisen, wobei die Gasexpansionsturbine ausgestaltet ist, die gebildete mechanische Energie auf die Turbinenwelle zu übertragen. Diese Turbinenwelle kann zweckmäßig mit einer Rotorwelle des Generators drehmomentübertragend gekoppelt sein, um die mechanische Energie auf den Rotor des Generators zu übertragen. So kann insgesamt die chemische Energie des Treibstoffs über den Zwischenschritt der Bildung von mechanischer Energie im Generator in elektrische Energie umgewandelt werden.

Alternativ zu der genannten Ausführungsform mit Gasexpansionsturbine kann die Verbrennungskraftmaschine prinzipiell auch anders ausgestaltet sein. Wesentlich ist nur, dass sie zur Umwandlung von im Treibstoff gespeicherter chemische Energie in mechanische Energie geeignet ist. So kann es sich beispielsweise auch um einen Kolbenmotor handeln.

Die gemäß der Erfindung mit dem Treibstoff kühlbare elektrische Maschine kann insbesondere als Generator ausgestaltet sein. Dieser Generator kann dazu ausgelegt sein, die von der Verbrennungskraftmaschine erzeugte mechanische Energie in elektrische Energie für den Antrieb des Fahrzeugs umzuwandeln. Die Kühlung des Generators mit dem Treibstoff als Kühlflüssigkeit ist besonders vorteilhaft, da die Verbrennungskraftmaschine und der Treibstofftank zweckmäßig in räumlicher Nähe zum Generator angeordnet sind, da die mechanische Energie ohnehin über Wellen von der Verbrennungskraftmaschine zum Generator übertragen werden muss. Durch diese räumliche Nähe steht auch der Treibstoff als Kühlmittel in der Nähe des Generators zur Verfügung. Da für die Erzeugung der für den Antrieb benötigten elektrischen Energie ein oder mehrere leistungsstarke Generatoren benötigt werden, liegt hier in jedem Fall ein Bedarf für ein leistungsfähiges Kühlsystem vor. Zweckmäßig weist das Antriebssystem bei dieser Ausgestaltung zusätzlich einen Motor zum elektrischen Antrieb des Fahrzeugs mit der vom Generator erzeugten elektrischen Energie auf. Dieser Motor kann optional ebenfalls mit dem Treibstoff als Kühlmittel gekühlt werden. Alternativ kann er prinzipiell aber auch auf andere Weise gekühlt werden, beispielsweise mit einem unterschiedlichen flüssigen und/oder gasförmigen Kühlmittel.

Die gemäß der Erfindung mit dem Treibstoff kühlbare elektrische Maschine kann alternativ auch als Motor ausgestaltet sein. Dieser Motor kann insbesondere dazu ausgebildet sein, um das Fahrzeug - insbesondere das Luftfahrzeug - elektrisch anzutreiben. Zweckmäßig weist das Antriebssystem dann zusätzlich einen Generator auf, um die von der Verbrennungskraftmaschine erzeugte mechanische Energie in elektrische Energie für den Antrieb des Fahrzeugs umzuwandeln. Dieser Generator kann optional ebenfalls mit dem Treibstoff als Kühlmittel gekühlt werden. Alternativ kann er prinzipiell aber auch auf andere Weise gekühlt werden, beispielsweise mit einem unterschiedlichen flüssigen und/oder gasförmigen Kühlmittel.

Der zu kühlende Bestandteil der elektrischen Maschine kann bevorzugt eine Statorwicklung im Stator der Maschine sein. Im Bereich der Statorwicklung einer Maschine wird typischerweise besonders viel Wärme freigesetzt, die beim Betrieb der Maschine effektiv gekühlt werden muss, um eine Überhitzung der Wicklung zu vermeiden. Eine effektive Statorkühlung ist insbesondere bei Maschinen mit hoher Leistung und hoher Leistungsdichte eine schwierige Herausforderung.

Die elektrische Maschine weist wenigstens eine Spulenwicklung auf, welche so ausgestaltet ist, dass die mit der Kühlflüssigkeit direkt kühlbar ist. Diese Spulenwicklung kann dann insbesondere eine Statorwicklung sein. Unter einer direkt kühlbaren Spulenwicklung soll eine solche Wicklung verstanden werden, die mit der Kühlflüssigkeit in direkten Kontakt treten kann. Die Spulenwicklung kann also von Kühlmittel angeströmt oder umströmt werden. Entweder kann der elektrische Leiter der Wicklung selbst oder aber eine den Leiter umgebende Isolations-, Imprägnierungs- und/oder Schutzschicht so in direktem Kontakt mit dem Kühlmittel stehen, dass die Spulenwicklung die im Betrieb entstehende Wärme an das Kühlmittel abführen kann. Wesentlich ist, dass die thermische Kopplung des Kühlmittels an die Spulenwicklung nicht durch zusätzliche wärmeleitende Kühlstrukturen über eine räumliche Entfernung hinweg erreicht wird, sondern dass das Kühlmittel in direktem Kontakt mit einem Bestandteil der Spulenwicklung steht. Bei einer solchen direkt kühlbaren Wicklung entfällt der Gewichtsbeitrag von zusätzlichen wärmeübertragenden Komponenten. Es ist aber prinzipiell auch möglich, den Treibstoff über solch eine zusätzliche thermisch leitfähige Komponente an die Wicklung anzukoppeln. Dies kann insbesondere dann vorteilhaft sein, wenn die elektrische Durchschlagfestigkeit des Treibstoffs nicht hoch genug ist oder er bei der Betriebstemperatur zu leicht entflammbar ist, um in direkten Kontakt mit der Wicklung gebracht zu werden.

Alternativ zu der beschriebenen Spulenwicklung kann es sich bei dem zu kühlenden Bestandteil der elektrischen Maschine aber auch ein oder mehrere andere Bestandteile handeln, die sich beim Betrieb aufheizen. Beispielsweise kann es sich auch um Strukturbauteile wie zum Beispiel das Gehäuse der Maschine handeln. Eine solche alternative Ausgestaltung ist nicht durch die Ansprüche abgedeckt.

Das Kühlsystem der elektrischen Maschine kann zweckmäßig eine Kühlmittel-Zuflussleitung umfassen, welche dazu ausgelegt ist, Treibstoff vom Treibstofftank zu einem kühlenden Bereich der elektrischen Maschine zu leiten. Mit solch einer Zuflussleitung kann der als Kühlmittel zu verwendende Treibstoff auf einfache Weise aus dem Tank in den Bereich der elektrischen Maschine gelangen. Der Treibstoff wird dabei durch die Zuflussleitung geführt, und es wird so vorteilhaft vermieden, dass entzündlicher Treibstoff in andere Bereiche der Maschine gelangt, in denen unter Umständen eine erhöhte Gefahr der Flammenbildung auftreten kann. Über die Zuflussleitung kann der Treibstoff aus dem vergleichsweise großen Reservoir des Treibstofftanks zur Verfügung gestellt werden, in dem er bei vergleichsweise niedriger Temperatur vorliegt. Beispielsweise kann beim Betrieb des Fahrzeugs die Temperatur des Treibstofftanks im Bereich zwischen ca. -45 °C und ca. 50 °C liegen, also deutlich unter der Betriebstemperatur des zu kühlenden Bereichs der elektrischen Maschine, welche beispielsweise im Bereich zwischen 100 °C und 170 °C liegen kann. Das Kühlsystem kann optional eine Pumpe aufweisen, um den Treibstoff durch die Zuflussleitung in den zu kühlenden Bereich der elektrischen Maschine zu transportieren.

Das Kühlsystem kann auch eine erste Kühlmittel-Abflussleitung umfassen, welche dazu ausgelegt ist, den durch die elektrische Maschine erwärmten Treibstoff wenigstens teilweise zur Verbrennungskraftmaschine zu leiten. Durch die Verwendung als Kühlflüssigkeit für die elektrische Maschine kann der Treibstoff im Betrieb auf eine Temperatur im Bereich zwischen - 40°C und 120°C, insbesondere zwischen 0°C und 120°C erwärmt werden. Der Treibstoff mit einer solchen Austrittstemperatur kann entweder unverdünnt oder im Gemisch mit zusätzlich direkt aus dem Treibstofftank zur Verfügung gestelltem weiterem Treibstoff in der Verbrennungskraftmaschine umgesetzt werden. Eine derartige Vorwärmung des Treibstoffs kann sogar für die Verbrennung in der Kraftmaschine vorteilhaft sein, denn gerade bei Treibstofftanks in Luftfahrzeugen kann durch die sehr kalte Umgebungsluft die Temperatur für eine optimale Verbrennung oft zu niedrig sein. Wenn die Austrittstemperatur des Treibstoffs nach der Kühlung der elektrischen für eine optimale Verbrennung zu hoch ist, kann kälterer Treibstoff aus dem Tank beigemischt werden. Hierzu kann eine weitere, direkte Treibstoffzuleitung zwischen Treibstofftank und Verbrennungskraftmaschine vorgesehen sein. Das Mischungsverhältnis zwischen als Kühlmittel verwendetem Treibstoff und direkt aus dem Tank eingespeisten Treibstoff kann dabei gegebenenfalls durch eine optional vorhandene Regeleinheit geregelt werden. Eine solche Regelung kann dazu verwendet werden, eine vorgegebene und gegebenenfalls zeitlich variierende Treibstoffmenge in einem vorgegebenen und gegebenenfalls zeitlich variierenden Temperaturbereich zur Verfügung zu stellen.

Alternativ oder zusätzlich kann das Kühlsystem eine zweite Kühlmittel-Abflussleitung umfassen, welche dazu ausgelegt ist, den durch die elektrische Maschine erwärmten Treibstoff wenigstens teilweise zurück in den Treibstofftank zu leiten. Eine solche zweite Kühlmittel-Abflussleitung kann vor allem dann vorteilhaft sein, wenn für die Kühlung der elektrischen Maschine ein größerer Flüssigkeitsstrom benötigt wird als für die Umsetzung von Treibstoff in der Verbrennungskraftmaschine. Dann ist vor allem die Kombination von erster und zweiter Kühlmittel-Abflussleitung zweckmäßig, um nur einen bestimmten Anteil von erwärmtem Treibstoff in die Verbrennungskraftmaschine zu leiten und den übrigen Teil zurück in den Treibstofftank zu leiten. Der so zurückgeleitete übrige Teil des vorgewärmten Treibstoffs kann während seiner erneuten Verweildauer im Treibstofftank wieder zurückgekühlt werden. Insbesondere kann ein Wärmeaustausch mit der Umgebung (vor allem mit der vergleichsweise kühlen Umgebungsluft beim Betrieb eines Luftfahrzeugs in größeren Höhen) eine zu starke Erwärmung des gesamten Treibstoffvorrates verhindern. Auch hier kann zweckmäßig eine Regelungseinheit vorgesehen sein, um den Anteil des in die Verbrennungskraftmaschine einzuspeisenden erwärmten Treibstoffs und den Anteil des in den Tank zurückgepumpten Treibstoffs dynamisch einstellen zu können.

Bei dem mit dem Antriebssystem versehenen Fahrzeug kann es sich insbesondere um ein Luftfahrzeug handeln. Der Treibstofftank des Antriebssystems kann in diesem Fall bevorzugt im Bereich einer oder mehrere Tragflächen angeordnet sein. Bei einer Verteilung auf mehrere Tragflächen kann dabei der Treibstofftank in mehrere Teiltanks aufgeteilt sein. Die Anordnung im Bereich der Tragflächen ist im Zusammenhang mit der vorliegenden Erfindung allgemein vorteilhaft, um eine effiziente Kühlung des Treibstoffs durch die kalte Umgebungsluft zu erreichen. So kann der Treibstoff im Treibstofftank insgesamt auf einem niedrigen Temperaturniveau gehalten werden, was für die Verwendung als Kühlflüssigkeit allgemein günstig ist. Vor allem dann, wenn ein Teil des vorgewärmten Treibstoffs wieder in den Trank zurückgeleitet wird, ist eine solche Kühlung besonders nützlich, um eine langfristige übermäßige Erwärmung des Treibstoffvorrats zu vermeiden. Wenn der Treibstofftank im Bereich der Tragflächen angeordnet ist, wirken die Tragflächen und/oder die Wand des Tanks selbst als Wärmetauscher zur Abgabe von Wärme an die Umgebungsluft. Der Treibstofftank und oder die Tragfläche(n) können optional zusätzlich noch ein oder mehrere weitere Wärmetauschstrukturen aufweisen, beispielsweise Kühlrippen zur verbesserten Abgabe von Wärme an die Umgebungsluft.

Bei dem Verfahren zur Kühlung der elektrischen Maschine kann im Anschluss an die Verwendung des Treibstoffs als Kühlflüssigkeit wenigstens ein Teil des so durch die Maschine erwärmten Treibstoffs in die Verbrennungskraftmaschine eingespeist werden.

Bei dieser Ausführungsvariante des Verfahrens kann insbesondere nur ein Teil des Treibstoffs in die Verbrennungskraftmaschine eingespeist werden, wobei der übrige Teil zurück in den Treibstofftank geleitet wird. Bei dieser Ausführungsvariante kann optional der in die Verbrennungskraftmaschine geleitete Anteil des durch die elektrische Maschine erwärmten Treibstoffs durch eine Regelvorrichtung geregelt werden. Die Vorteile dieser vorteilhaften Ausführungsformen des Verfahrens ergeben sich analog zu den entsprechenden oben beschriebenen Ausführungsformen des Antriebssystems.

Nachfolgend wird die Erfindung anhand einiger bevorzugter Ausführungsbeispiele unter Bezugnahme auf die angehängten Zeichnungen beschrieben, in denen:
- Figur 1: eine schematische Darstellung eines Luftfahrzeugs nach einem ersten Ausführungsbeispiel der Erfindung zeigt,
- Figur 2: eine schematische Darstellung des hauptsächlichen Energieflusses in einem Antriebssystem nach einem zweiten Ausführungsbeispiel der Erfindung zeigt,
- Figur 3: eine schematische Darstellung des Treibstoffflusses in einem Antriebssystem nach einem dritten Ausführungsbeispiel der Erfindung zeigt und
- Figur 4: eine schematische Darstellung des Treibstoffflusses in einem Antriebssystem nach einem vierten Beispiel der Erfindung zeigt.

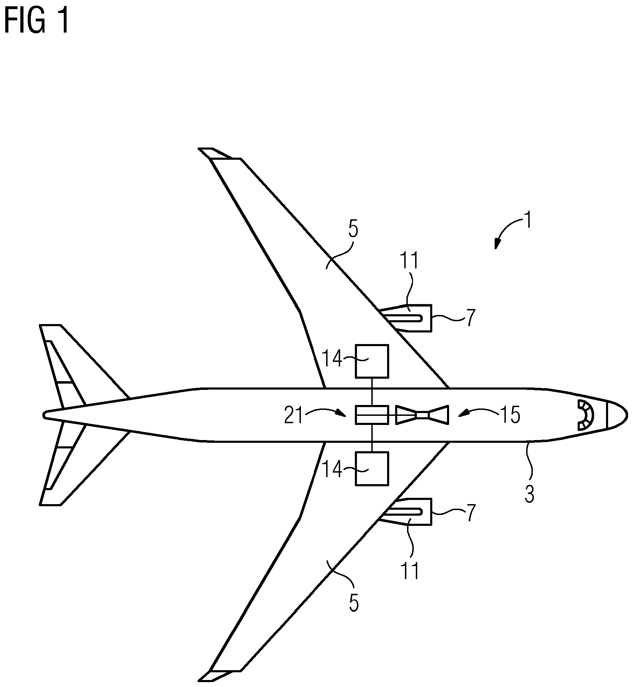

Figur 1 zeigt eine Darstellung eines Luftfahrzeugs 1 nach einem ersten Beispiel der Erfindung in schematischer Aufsicht. Das Luftfahrzeug 1 weist einen Rumpf 3 und zwei Tragflächen 5 mit jeweils an den Tragflächen 5 angeordneten Gondeln 7 auf. Innerhalb der beiden Gondeln 7 sind zwei hier nicht näher dargestellte Elektromotoren 11 angeordnet, die zusammen den Antrieb des Luftfahrzeugs bewirken. Prinzipiell ist aber auch der Antrieb mit nur einem Elektromotor möglich, der auch an anderer Stelle am Luftfahrzeug angeordnet sein kann. Ebenso können auch mehr als zwei derartige Gondeln den Antrieb bewirken.

Der elektrische Strom für die Elektromotoren 11 wird mittels eines Generators 21 erzeugt, wobei die mechanische Energie für den Generator 21 durch eine Verbrennungskraftmaschine 15 geliefert wird. Verbrennungskraftmaschine 15 und Generator 21 sind beide in diesem Beispiel im Rumpf 3 des Luftfahrzeugs 1 angeordnet. Der für den Betrieb der Verbrennungskraftmaschine 15 benötige Treibstoff wird dabei aus zwei Treibstofftanks 14 zugeführt, die innerhalb der beiden Tragflächen 5 des Luftfahrzeugs 1 angeordnet sind. Es sind jedoch auch andere Orte für die Treibstofftanks denkbar, und es wird prinzipiell auch nur ein Treibstofftank gebraucht. Wie durch zwei Verbindungslinien schematisch angedeutet ist und weiter unten noch ausführlicher erläutert wird, wird der Treibstoff über den Umweg des Generators 21 in die Verbrennungskraftmaschine 15 eingespeist. Der Generator 21 ist mit hier ebenfalls nicht dargestellten elektrischen Versorgungsleitungen mit den beiden Motoren 11 verbunden. Es ist auch möglich, dass mehrere derartige Verbrennungskraftmaschinen und/oder Generatoren an Bord vorhanden sind. Es handelt sich bei dem gezeigten Luftfahrzeug 1 also insgesamt um ein hybridelektrisch angetriebenes Luftfahrzeug, bei dem der Antrieb vollständig durch Elektromotoren 11 realisiert wird und bei dem der hierfür benötigte elektrische Strom an Bord des Luftfahrzeugs 1 aus einem Treibstoff erzeugt wird.

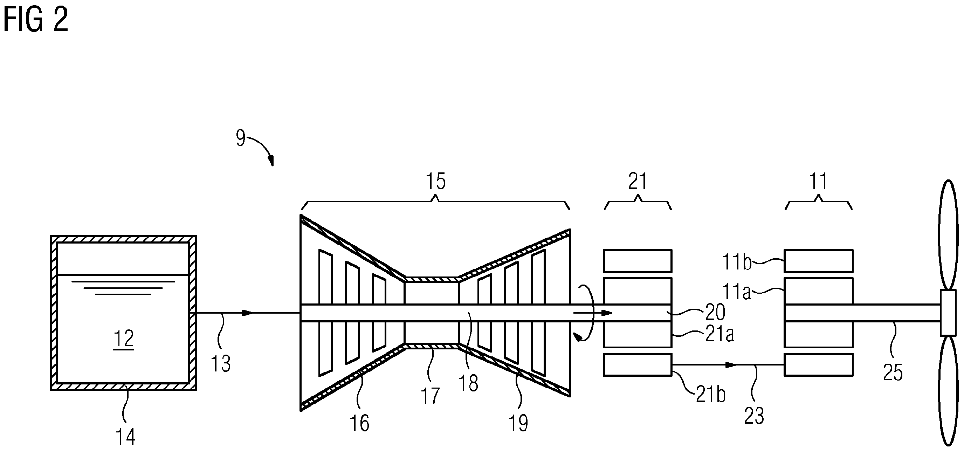

In Figur 2 ist eine schematische Darstellung des Energieflusses in einem Antriebssystem 9 für ein elektrisch angetriebenes Luftfahrzeug gezeigt. Dieses Luftfahrzeug kann beispielsweise ähnlich wie in Figur 1 gezeigt aufgebaut sein. Es kann aber auch prinzipiell eine davon Abweichende Anzahl und/oder Anordnung von Motor(en), Generator(en) und Treibstofftank(s) aufweisen. Die Flussrichtung der Energie führt im Schema der Figur 2 von links nach rechts, wie durch Pfeile angedeutet. Grundlegender Energieträger ist der flüssige Treibstoff 12, der in wenigstens einem Treibstofftank 14 zur Verfügung gestellt wird. Dabei kann der gezeigte Treibstofftank 14 auch stellvertretend für mehrere solche Treibstofftanks stehen. Ähnliches gilt für die übrigen gezeigten Komponenten. Der Treibstoff 12 wird mittels einer Treibstoffzuleitung 13 vom Treibstofftank zu der Verbrennungskraftmaschine 15 geleitet. Wie weiter unten noch ausführlicher erläutert, geschieht diese Einspeisung gemäß der vorliegenden Erfindung nicht direkt, sondern zumindest teilweise über einen zu kühlenden Teil von wenigstens einer der an Bord vorhanden elektrischen Maschinen 11 oder 21. Dies ist im Energieflussschema der Figur 2 der Übersichtlichkeit halber nicht dargestellt. Wesentlich für das Schema der Figur 2 ist nur, dass der Treibstoff 12 zu irgendeinem Zeitpunkt in die Verbrennungskraftmaschine 15 eingespeist wird, und dass dort die chemische Energie dieses Treibstoffs in mechanische Energie umgewandelt wird, und zwar in Form einer mechanischen Drehung der Turbinenwelle 18 der Verbrennungskraftmaschine, wie dies durch den gedrehten Pfeil im rechten Teil der Verbrennungskraftmaschine angedeutet ist. Die Verbrennungskraftmaschine 15 weist einen Verdichter 19, eine Verbrennungskammer 17 und eine Gasexpansionsturbine 16 auf. Durch den Verdichter 19 wird Luft in die Verbrennungskraftmaschine 15 angesaugt und komprimiert und danach in der Verbrennungskammer 17 zusammen mit dem eingesetzten und der Luft zugemischten Treibstoff verbrannt. Das entstehende heiße Gas wird in der Gasexpansionsturbine 16 expandiert und treibt hier über die nur schematisch angedeuteten Turbinenschaufeln die Turbinenwelle 18 an. Diese ist zur Übertragung von mechanischer Energie an die Rotorwelle 21a des weiter rechts dargestellten Generators 21 gekoppelt. Der Generator 21 umfasst einen Rotor 21a und einen Stator 21b, wobei der Rotor 21a im gezeigten Beispiel innerhalb des Stators 21b mittels der Rotorwelle 20 drehbar gelagert ist. Um einen besonders leichten Generator 21 für den Einsatz im Luftfahrzeug 1 zu erhalten können Rotor 21a und/oder Stator 21b vorteilhaft mit einer oder mehreren supraleitenden Wicklungen versehen sein. Es können aber auch normalleitende Wicklungen zum Einsatz kommen. Wesentlich für die Funktion ist nur, dass der Generator zur Umwandlung von über die Rotorwelle 20 eingespeister mechanischer Energie in elektrische Energie geeignet ist. Die elektrische Energie kann dann über wenigstens eine elektrische Versorgungsleitung 23 vom Generator 21 zu dem wenigstens einen Motor 11 des Luftfahrzeugs 1 geleitet werden. Diese elektrische Motor 11 weist wiederum einen Stator 11b und einen Rotor 11a auf einer Rotorwelle 25 auf, wobei der Schub des Luftfahrzeugs 1 aus der Drehung des Rotors erzeugt wird. Der zusätzliche Energiefluss, der im Antriebssystem durch die zusätzliche Verwendung 12 des Treibstoffs als Kühlmittel zustande kommt, ist in Figur 2 nicht berücksichtigt. Zwei verschiedene Möglichkeiten der Treibstoffflüsse durch das Antriebssystem werden im Zusammenhang mit den folgenden beiden Beispielen erläutert.

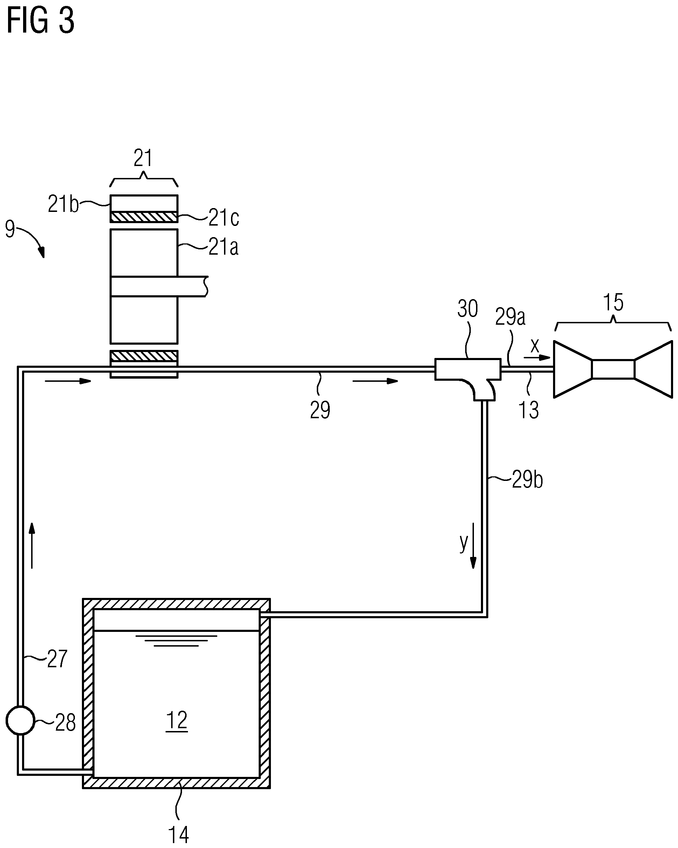

In Figur 3 ist der Fluss des Treibstoffs 12 durch die verschiedenen Komponenten eines Antriebssystems 9 nach einem Beispiel der Erfindung schematisch etwas detaillierter dargestellt. Dieses Antriebssystem 9 kann im insbesondere Hinblick auf den grundlegenden Energiefluss so ausgestaltet sein, wie dies im Zusammenhang mit der Figur 2 erläutert wurde. Es umfasst auch in diesem Beispiel einen Treibstofftank 14, einen Generator 21 und eine Verbrennungskraftmaschine 15. Der Treibstoff 12 wird aus dem Treibstofftank 14 mittels einer Pumpe 28 über eine Kühlmittel-Zuflussleitung 27 als Kühlmittel in den Generator 21 eingeleitet. Genauer gesagt wird es in den Stator 21b des Generators 21 eingeleitet, so es in thermischen Kontakt mit der Statorwicklung 21c gelangt. Diese Komponente des Generators 21 wird bei dessen Betrieb am stärksten aufgeheizt, und sollte daher laufend gekühlt werden, um eine Überhitzung zu vermeiden. Im gezeigten Beispiel wird dazu eine direkte Wicklungskühlung mit dem Treibstoff eingesetzt. Die mechanische Kopplung der Rotorwelle des Generators 21 mit der Turbinenwelle der Verbrennungskraftmaschine 15 ist in Figur 3 nicht näher dargestellt. Wesentlich ist im Zusammenhang mit dem Schema der Figur 3, wie der durch die Kühlung des Generators 21 erwärmte Treibstoff 12 weiter verwendet wird: Zunächst wird der so vorgewärmte Treibstoff 12 über eine gemeinsame Kühlmittel-Abflussleitung 29 von dem Generator weggeführt. Ein dem Generator nachgeschaltetes Dreiwegeventil 30 teilt diese Abflussleitung 29 in eine erste Teilleitung 29a und eine zweite Teilleitung 29b. Die erste Teilleitung führt einen Anteil x des vorgewärmten Treibstoffs zur Verbrennungskraftmaschine. Diese erste Teilleitung 29a entspricht also der in Figur 2 dargestellten Treibstoffzuleitung 13. Die zweite Teilleitung 29b führt den verbleibenden Anteil y des vorgewärmten Treibstoffs zurück in den Treibstofftank 14. Dort vermischt er sich mit dem übrigen Treibstoffvorrat und kann zusammen mit diesem durch Abgabe von Wärme an die Umgebungsluft rückgekühlt werden. Eine solche Wärmeabgabe ist besonders vorteilhaft, wenn der wenigstens eine Treibstofftank (oder auch mehrere Teiltanks) wie in Figur 1 dargestellt im Bereich der Tragflächen 5 angeordnet ist. Eine große Oberfläche, die thermisch gut an den Tankinhalt angekoppelt ist, sowie gegebenenfalls weitere Kühlstrukturen wie Kühlrippen oder ähnliches können die Wärmeabgabe an die Umgebungsluft zusätzlich fördern.

Die beschriebene Aufteilung des vorgewärmten Treibstoffs in einen der Verbrennungskraftmaschine zugeführten Anteil x und einen in den Tank 14 rückgeführten Anteil y kann vorteilhaft sein, wenn der für die Kühlung der elektrischen Maschine benötigte Stoffstrom größer ist als der von der Verbrennungskraftmaschine benötigte Stoffstrom an Treibstoff 12. Dies wird durch das folgende Beispiel verdeutlicht:

Als Treibstoff 12 wird Kerosin eingesetzt Kerosin hat einen Energieinhalt von etwa 43 MJ/kg. Unter Annahme eines Wirkungsgrades der Verbrennungskraftmaschine 15 von etwa 50 % braucht diese zur Erzeugung von 10 MW mechanischer Antriebsleitung für den Generator einen Stofffluss an Kerosin von etwa 0,5 kg/s. Im Generator kann beispielsweise eine Verlustleitung von etwa 250 kW anfallen, die durch das Kühlsystem abgeführt werden muss. Wird eine Erwärmung des Treibstoffs 12 von etwa 50 K beim Durchfluss durch den Generator 21 zugelassen, so ist zur Abführung dieser Verluste ein Stofffluss an Kerosin von etwa 2,5 kg/s notwendig, also etwa das fünffache der von der Verbrennungskraftmaschine 15 benötigen Menge. Ein möglicher Betriebsmodus könnte also vorsehen, dass x bei etwa 20% der von dem Generator abfließenden Treibstoffmenge liegt und y entsprechend bei etwa 80% dieser Menge liegt.

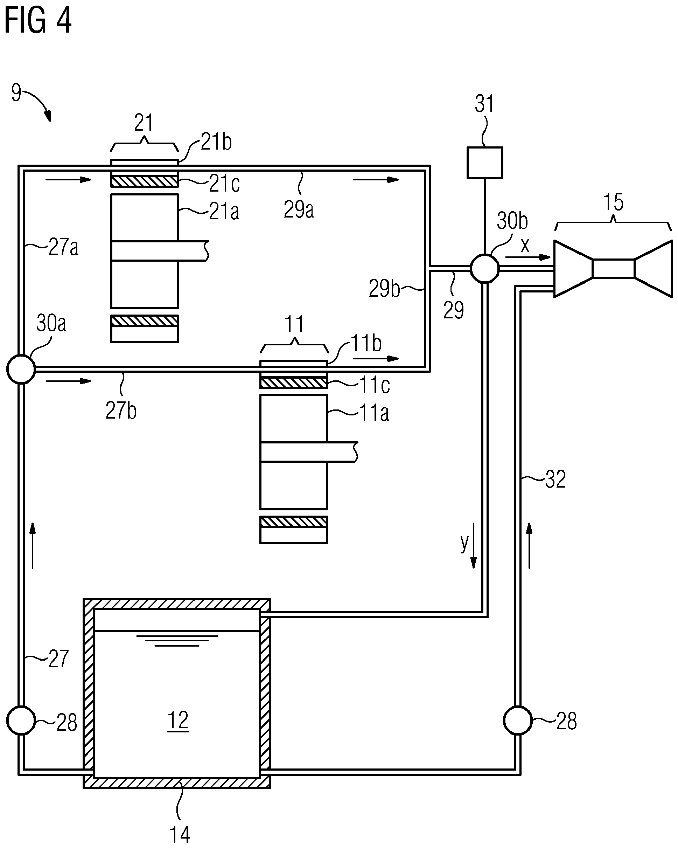

In Figur 4 ist ein weiteres, alternatives Beispiel für den Treibstofffluss in einem Antriebssystem 9 gemäß der vorliegenden Erfindung gezeigt. Auch dieses Antriebssystem kann im Hinblick auf den grundlegenden Energiefluss ähnlich wie in Figur 2 gezeigt ausgestaltet sein. Figur 4 zeigt daher viele ähnliche Komponenten wie das Antriebssystem der Figur 3, die zur besseren Übersicht mit denselben Bezugszeichen gekennzeichnet sind. So weist das Antriebssystem der Figur 4 ebenfalls einen Treibstofftank 14, einen Generator 21 und eine Verbrennungskraftmaschine 15 auf. Analog zur Figur 3 wird auch hier Treibstoff 12 aus dem Treibstofftank 14 über eine Kühlmittel-Zuflussleitung 27 als Kühlmittel in den Generator 21 geleitet, wo dessen Statorwicklung 21c gekühlt wird. Zusätzlich ist hier aber auch noch eine ähnliche Kühlung der Statorwicklung 11c des Rotors 11b der elektrischen Motors 11 vorgesehen. Hierzu ist in der Zuleitung 27 ein erstes Dreiwegeventil 30a angeordnet, welches den Treibstoffzustrom zwischen zwei Teilleitungen 27a und 27b aufteilt. Die erste Teilleitung führt von dort aus Treibstoff als Kühlmittel zum Generator 21, und die zweite Teilleitung 27b führt in ähnlicher Weise Treibstoff als Kühlmittel zum Motor 11. Dabei können auch hier Generator 21 und Motor 11 für mehrere entsprechende Komponenten stehen, die zusammen zum Energiefluss im Antriebssystem 9 beitragen und in ähnlicher Weise mit Treibstoff gekühlt werden.

Nach dem Kühlen der beiden elektrischen Maschinen 21 und 11 wird der hierbei erwärmte Treibstoff in den zwei Teilleitungen 29a und 29b der Abflussleitung von den Maschinen weggeleitet und anschließend zu einer gemeinsamen Abflussleitung 29 zusammengeführt. Es handelt sich also insgesamt um parallel geführte Kühlmittelpfade für die beiden unterschiedlichen elektrischen Maschinen. Die Temperatur des für die Kühlung verwendeten Treibstoffs ist daher für beide Maschinen ähnlich. Wenn die Kühlanforderungen der beiden Maschinentypen verschieden sind (beispielsweise weil für einen Typ mehrere einzelne Maschinen Verwendung finden), so kann prinzipiell auch ein serieller Fluss von Kühlmittel durch nacheinander angeordnete Maschinen zum Einsatz kommen.

Ähnlich wie beim Beispiel der Figur 3 wird auch hier der Treibstoff 12 in der Kühlmittel-Abflussleitung 29 über ein Dreiwegeventil 30b in zwei Anteile x und y aufgeteilt. Der Anteil x wird der Verbrennungskraftmaschine zugeführt, und der Anteil y gelangt zurück in den Treibstofftank 14. Um diese beiden Mengenanteile gegebenenfalls dynamisch regeln zu können, ist eine Regelvorrichtung 31 am Dreiwegeventil 30b vorgesehen.

Falls die Temperatur des in die Verbrennungsmaschine 15 eingeleiteten Anteils x des vorgewärmten Treibstoffs trotzdem noch zu hoch ist, kann zusätzlich Treibstoff auch auf direktem Weg vom Treibstofftank 14 in die Verbrennungskraftmaschine 15 eingeleitet werden. Diese Möglichkeit ist ebenfalls in Figur 4 schematisch wiedergegeben, und zwar in Form der direkten Treibstoffzuführung 32, die mittels einer weiteren Pumpe 28 kälteren Treibstoff aus dem Reservoir des Tanks 14 zuführen kann. Diese zusätzliche direkte Treibstoffzuführung kann selbstverständlich auch bei anderen Konfigurationen des Kühlsystems Anwendung finden, also beispielsweise bei Kühlsystemen, bei denen ähnlich wie in Figur 3 nur eine der Maschinen 21 und 11 von dem Treibstoff gekühlt wird. Alternativ zu den dargestellten Konfigurationen mit einer Aufteilung des vorgewärmten Treibstoffs in zwei Anteile x und y ist es auch möglich, den gesamten vorgewärmten Treibstoff in die Verbrennungskraftmaschine 15 einzuspeisen und dabei insbesondere eine stärkere Erwärmung des Treibstoffs durch die Kühlung der Maschine zuzulassen. Um einen vorgegebenen Temperaturbereich des in der Verbrennungskraftmaschine zu erreichen, kann dann vor der Einspeisung in die Verbrennungskraftmaschine ein direkt aus dem Tank zugeführter Anteil an Treibstoff zugemischt werden. Auch hier kann ein Dreiwegeventil mit einer Regelvorrichtung zum Einsatz kommen, um eine Temperatur in einem vorgegebenen Bereich einzustellen.

## Patentansprüche

1. Antriebssystem (9) für ein Fahrzeug, insbesondere ein Luftfahrzeug (1), umfassend
- eine Verbrennungskraftmaschine (15) zur Umwandlung von in einem flüssigen Treibstoff (12) gespeicherter chemischer Energie in mechanische Energie,
- einen Treibstofftank (14) zur Versorgung der Verbrennungskraftmaschine (15) mit Treibstoff (12)
- und eine elektrische Maschine (11, 21) mit einem Rotor (11a,21a) und einem Stator (11b, 21b) sowie einem Kühlsystem zur Kühlung von wenigstens einem Bestandteil (11c, 21c) der elektrischen Maschine (11, 21) mit Hilfe einer Kühlflüssigkeit (12),
wobei das Kühlsystem dazu ausgelegt ist, den Treibstoff (12) der Verbrennungskraftmaschine (15) als Kühlflüssigkeit für die elektrische Maschine (11, 21) zu verwenden,
wobei der Treibstoff (12) Kerosin ist
und wobei die elektrische Maschine (11,21) wenigstens eine Spulenwicklung (11c, 21c) aufweist, welche so ausgestaltet ist, dass sie mit der Kühlflüssigkeit (12) direkt kühlbar ist.

2. Antriebssystem (9) nach Anspruch 1, bei welchem die elektrische Maschine (11, 21) eine Leistungsdichte von wenigstens 5 kW/kg und/oder einen Nennleistung von wenigstens 5 MW aufweist.

3. Antriebssystem (9) nach einem der vorhergehenden Ansprüche, bei welchem die Verbrennungskraftmaschine (15) eine Gasexpansionsturbine (16) und eine Turbinenwelle (18) aufweist, wobei die Gasexpansionsturbine (16) ausgestaltet ist, die gebildeten mechanische Energie auf die Turbinenwelle (18) zu übertragen.

4. Antriebssystem (9) nach einem der vorhergehenden Ansprüche, bei welchem die elektrische Maschine als Generator (21) ausgestaltet ist, um die von der Verbrennungskraftmaschine (15) erzeugte mechanische Energie in elektrische Energie für den Antrieb des Fahrzeugs (1) umzuwandeln.

5. Antriebssystem (9) nach einem der Ansprüche 1 bis 3, bei welchem die elektrische Maschine als Motor (11) ausgestaltet ist, um das Fahrzeug (1) elektrisch anzutreiben.

6. Antriebssystem (9) nach einem der vorhergehenden Ansprüche, bei welchem das Kühlsystem eine Kühlmittel-Zuflussleitung (27) umfasst, welche dazu ausgelegt ist, Treibstoff (12) vom Treibstofftank (14) zu einem zu kühlenden Bereich (11c, 21c) der elektrischen Maschine (11, 21) zu leiten.

7. Antriebssystem (9) nach einem der vorhergehenden Ansprüche, bei welchem das Kühlsystem eine erste Kühlmittel-Abflussleitung (29a) umfasst, welche dazu ausgelegt ist, den durch die elektrische Maschine (11, 21) erwärmten Treibstoff (12) wenigstens teilweise zur Verbrennungskraftmaschine (15) zu leiten.

8. Antriebssystem (9) nach Anspruch 7, bei welchem das Kühlsystem eine zweite Kühlmittel-Abflussleitung (29b) umfasst, welche dazu ausgelegt ist, den durch die elektrische Maschine (11, 21) erwärmten Treibstoff (12) wenigstens teilweise zurück in den Treibstofftank (14) zu leiten.

9. Fahrzeug, insbesondere Luftfahrzeug (1), mit einem Antriebssystem (9) nach einem der vorhergehenden Ansprüche.

10. Verfahren zur Kühlung einer elektrischen Maschine (11, 21) in einem Antriebssystem (9) nach einem der Ansprüche 1 bis 8, welches den folgenden Schritt aufweist:
- Einspeisen von Treibstoff (12) aus dem Treibstofftank (14) in das Kühlsystem und Verwendung des Treibstoffs (12) als Kühlflüssigkeit zum direkten Kühlen von der Spulenwicklung (11c,21c) der elektrischen Maschine (11, 21), wobei der Treibstoff (12) Kerosin ist

11. Verfahren nach Anspruch 10, bei dem im Anschluss an die Verwendung des Treibstoffs (12) als Kühlflüssigkeit wenigstens ein Teil des so durch die Maschine (11, 21) erwärmten Treibstoffs (12) in die Verbrennungskraftmaschine (15) eingespeist wird.

12. Verfahren nach Anspruch 11, bei dem nur ein Teil (x) des durch die elektrische Maschine (11, 21) erwärmten Treibstoffs (12) in die Verbrennungskraftmaschine (15) eingespeist wird und der übrige Teil (y) zurück in den Treibstofftank (14) geleitet wird.

13. Verfahren nach Anspruch 12, bei welchem der in die Verbrennungskraftmaschine (15) geleitete Anteil (x) des durch die elektrische Maschine erwärmten Treibstoffs durch eine Regelungsvorrichtung (31) geregelt wird.

## Claims

1. Drive system (9) for a vehicle, in particular an aircraft (1), comprising
- an internal combustion engine (15) for converting chemical energy stored in a liquid fuel (12) into mechanical energy,
- a fuel tank (14) for supplying the internal combustion engine (15) with fuel (12), and
- an electric machine (11, 21) having a rotor (11a, 21a) and a stator (11b, 21b), and a cooling system for cooling at least one component (11c, 21c) of the electric machine (11, 21) using a cooling liquid (12),
wherein the cooling system is designed to use the fuel (12) of the internal combustion engine (15) as cooling liquid for the electric machine (11, 21),
wherein the fuel (12) is kerosene,
and wherein the electric machine (11, 21) comprises at least one coil winding (11c, 21c), which is so designed that it can be directly cooled by the cooling liquid (12) .

2. Drive system (9) according to Claim 1, in which the electric machine (11, 21) has a power density of at least 5kW/kg and/or a rated output of at least 5 MW.

3. Drive system (9) according to one of the preceding claims, in which the internal combustion engine (15) comprises a gas expansion turbine (16) and a turbine shaft (18), wherein the gas expansion turbine (16) is designed to transmit the mechanical energy generated to the turbine shaft (18).

4. Drive system (9) according to one of the preceding claims, in which the electric machine is embodied as a generator (21), in order to convert the mechanical energy generated by the internal combustion engine (15) into electrical energy for powering the vehicle (1).

5. Drive system (9) according to one of Claims 1 to 3, in which the electric machine is embodied as a motor (11) in order to power the vehicle (1) electrically.

6. Drive system (9) according to one of the preceding claims, in which the cooling system comprises a coolant admission line (27), which is designed to carry fuel (12) from the fuel tank (14) to an area (11c, 21c) of the electric machine (11, 21) to be cooled.

7. Drive system (9) according to one of the preceding claims, in which the cooling system comprises a first coolant discharge line (29a), which is designed to carry at least some of the fuel (12), heated by the electric machine (11, 21), to the internal combustion engine (15).

8. Drive system (9) according to Claim 7, in which the cooling system comprises a second coolant discharge line (29b), which is designed to carry at least some of the fuel (12), heated by the electric machine (11, 21), back into the fuel tank (14).

9. Vehicle, in particular aircraft (1), having a drive system (9) according to one of the preceding claims.

10. Method for cooling an electric machine (11, 21) in a drive system (9) according to one of Claims 1 to 8, which comprises the following step:
- feeding fuel (12) from the fuel tank (14) into the cooling system and using the fuel (12) as cooling liquid for directly cooling the coil winding (11c, 21c) of the electric machine (11, 21), wherein the fuel (12) is kerosene.

11. Method according to Claim 10, in which following use of the fuel (12) as cooling liquid at least a portion of the fuel (12) thus heated by the machine (11, 21) is fed into the internal combustion engine (15).

12. Method according to Claim 11, in which only a portion (x) of the fuel (12) heated by the electric machine (11, 21) is fed into the internal combustion engine (12), and the remainder (y) is carried back into the fuel tank (14).

13. Method according to Claim 12, in which the fraction (x) of the fuel heated by the electric machine that is carried into the internal combustion engine (15) is controlled by a control device (31).

## Revendications

1. Système de propulsion (9) pour un véhicule, en particulier un aéronef (1), comprenant
- un moteur à combustion interne (15) servant à convertir de l'énergie chimique stockée dans un carburant liquide (12) en énergie mécanique,
- un réservoir de carburant (14) servant à alimenter le moteur à combustion interne (15) en carburant (12),
- et une machine électrique (11, 21) dotée d'un rotor (11a, 21a) et d'un stator (11b, 21b) ainsi que d'un système de refroidissement servant à refroidir au moins un composant (11c, 21c) de la machine électrique (11, 21) à l'aide d'un liquide de refroidissement (12),
le système de refroidissement étant conçu pour utiliser le carburant (12) du moteur à combustion interne (15) comme liquide de refroidissement pour la machine électrique (11, 21),
le carburant (12) étant du kérosène,
et la machine électrique (11, 21) présentant au moins un enroulement de bobine (11c, 21c) qui est conçu de telle sorte qu'il peut être refroidi directement par le liquide de refroidissement (12).

2. Système de propulsion (9) selon la revendication 1, dans lequel la machine électrique (11, 21) présente une densité de puissance d'au moins 5 kW/kg et/ou une puissance nominale d'au moins 5 MW.

3. Système de propulsion (9) selon l'une quelconque des revendications précédentes, dans lequel le moteur à combustion interne (15) présente une turbine à gaz à expansion (16) et un arbre de turbine (18), la turbine à gaz à expansion (16) étant configurée pour transférer l'énergie mécanique créée sur l'arbre de turbine (18).

4. Système de propulsion (9) selon l'une quelconque des revendications précédentes, dans lequel la machine électrique est configurée sous forme de générateur (21) afin de convertir l'énergie mécanique produite par le moteur à combustion interne (15) en énergie électrique pour la propulsion du véhicule (1).

5. Système de propulsion (9) selon l'une quelconque des revendications 1 à 3, dans lequel la machine électrique est configurée sous forme de moteur (11) afin de propulser le véhicule (1) de manière électrique.

6. Système de propulsion (9) selon l'une quelconque des revendications précédentes, dans lequel le système de refroidissement comprend une conduite d'arrivée de produit réfrigérant (27) qui est conçue pour conduire du carburant (12) du réservoir de carburant (14) à une zone à refroidir (11c, 21c) de la machine électrique (11, 21).

7. Système de propulsion (9) selon l'une quelconque des revendications précédentes, dans lequel le système de refroidissement comprend une première conduite d'évacuation de produit réfrigérant (29a) qui est conçue pour conduire le carburant (12) réchauffé par la machine électrique (11, 21) au moins partiellement au moteur à combustion interne (15).

8. Système de propulsion (9) selon la revendication 7, dans lequel le système de refroidissement comprend une deuxième conduite d'évacuation de produit réfrigérant (29b) qui est conçue pour ramener le carburant (12) réchauffé par la machine électrique (11, 21) au moins partiellement dans le réservoir de carburant (14).

9. Véhicule, en particulier aéronef (1), comprenant un système de propulsion (9) selon l'une quelconque des revendications précédentes.

10. Procédé de refroidissement d'une machine électrique (11, 21) dans un système de propulsion (9) selon l'une quelconque des revendications 1 à 8, présentant l'étape suivante consistant à :
- alimenter du carburant (12) provenant du réservoir de carburant (14) dans le système de refroidissement et utiliser le carburant (12) comme liquide de refroidissement pour le refroidissement direct de l'enroulement de bobine (11c, 21c) de la machine électrique (11, 21), le carburant (12) étant du kérosène.

11. Procédé selon la revendication 10, dans lequel, suite à l'utilisation du carburant (12) comme liquide de refroidissement, au moins une partie du carburant (12) ainsi réchauffé par la machine (11, 21) est alimentée dans le moteur à combustion interne (15).

12. Procédé selon la revendication 11, dans lequel seule une partie (x) du carburant (12) réchauffé par la machine électrique (11, 21) est alimentée dans le moteur à combustion interne (15), et la partie restante (y) est ramenée dans le réservoir de carburant (14).

13. Procédé selon la revendication 12, dans lequel la partie (x) du carburant réchauffé par la machine électrique, conduite dans le moteur à combustion interne (15), est régulée par un dispositif de régulation (31).
